# EUROPÄISCHE PATENTSCHRIFT

(11) **EP 0 504 632 B1**
(45) Veröffentlichungstag und Bekanntmachung des Hinweises auf die Patenterteilung: **02.11.1994**
(21) Anmeldenummer: 92103275.1
(22) Anmeldetag: 26.02.1992
(51) Int. Cl.: A23L 1/187

(54) **Pudding**
Pudding
Pouding

(30) Priorität: 18.03.1991 DE 9103312 U; 24.06.1991 DE 9107764 U
(43) Veröffentlichungstag der Anmeldung: 23.09.1992
(73) Patentinhaber: Voag, Josef, 86551 Aichach (DE)
(72) Erfinder: Voag, Josef, W-8890 Aichach (DE)
(74) Vertreter: KUHNEN, WACKER & PARTNER

(56) Entgegenhaltungen:
- EP-A- 0 186 233
- DE-A- 2 651 464
- US-A- 4 919 958
- DATABASE WPIL Derwent Publications Ltd.,London, GB; DATABSE WPIL, accession no. 91-220297 [30], week 9130; & JP- A - 3143358 (SAN EI CHEM IND KK) 18.06.1991

## Beschreibung

Die Erfindung betrifft einen Pudding, der im wesentlichen aus Milch, insbesondere Magermilch, Zucker, Stärke, Bindemittel, Geliermittel und gegebenenfalls Kakao, Vanille und/oder Aromastoffen sowie Sahne-Topping besteht. Alle bisher bekannten Schoko- und Vanillepuddings gehen in der Rezeptur von Magermilch beziehungsweise Sahne aus. Diese verhältnismäßig teuren Einsatzstoffe machen in der Regel mehr als 80 Gew. % der Gesamtrezeptur des Puddings aus.

Bereits aus der EP 186 233 A2 ist ein Pudding bekannt, in welchem die gemäß üblichen Rezepturen verwendete Stärke und bis zu 75 % des Milchanteils durch ein konzentriertes Molkeproteinprodukt ersetzt werden. Dieses Molkeproteinprodukt wird dadurch hergestellt, daß ein durch Ultrafiltration gewonnenes Molkeproteinkonzentrat bei 85 bis 95° denaturiert wird, wobei eine Koagulation des Molkeproteins erfolgt. Nach dieser Denaturierungsbehandlung wird das resultierende Produkt vorzugsweise bei einem Druck von 25 bis 250 bar homogenisiert. Dieser Pudding bedingt durch die verfahrenstechnische Aufbereitung der Molke eine Verteuerung des Herstellungsprozesses.

Aufgabe der vorliegenden Erfindung ist es, einen gattungsgemäßen Pudding in einer Rezeptur bereitzustellen, die den Einsatz kostengünstigerer Einsatzstoffe bei gleichbleibender geschmacklicher Qualität gewährleistet.

Erfindungsgemäß wird ein Großteil des Milchanteils durch Molke ersetzt. Die Molke kann auch als Molkekonzentrat bzw. Molkepulver der Mischung zugesetzt werden. Bei dem vorzugsweise verwendeten Molkekonzentrat handelt es sich um ein Süßmolkekonzentrat, das als Abfallprodukt bei der Käseherstellung anfällt. Um das Produkt entsprechend geschmacklich zu verbessern, kann das Molkekonzentrat entsalzt oder hydrolisiert werden.

Überraschenderweise führt der Einsatz von Molke, Molkekonzentrat bzw. Molkepulver bei der Herstellung von Pudding zu keinerlei Geschmackseinbußen. Bislang wurde die bei der Käseherstellung anfallende Molke eingedampft und entweder als Schweinefutter verwendet oder zur Laktoseherstellung eingesetzt, soweit sie nicht sogar als Abfallprodukt der Abfalldeponie zugeführt wurde. Gemäß der Lehre dieser Erfindung läßt sich die Molke nun in besonders vorteilhafter Weise in einem geschmacklich qualifizierten Lebensmittel einsetzen.

Gemäß einer vorteilhaften Ausbildung der Erfindung sind ca. 50 % des Milchanteils durch Molkekonzentrat ersetzt. Der Gewichtsanteil des Molkekonzentrats im Pudding kann 35 Gew. % bis 50 Gew. %, vorzugsweise 40 Gew. % bis 45 Gew. % ausmachen.

Das eingesetzte Molkekonzentrat hat gemäß einer bevorzugten Ausgestaltung der Erfindung einen Trockenanteil von 7 % bis 12 %, vorzugsweise 10 %.

Im folgenden wird die Erfindung anhand von Ausführungsbeispielen näher erläutert:
Ein wohlschmeckender Schokoladepudding wird unter Verwendung von ca. 40-60 Gew. % Magermilch mit einer Trockenmasse von ca. 9 %, 8-12 Gew. % Zucker, 0,8-1,6 Gew. % Kakao, 1,5-3,5 Gew. % Stärke, 0,2-0,5 Gew. % Caragen, 0,5-1,5 Gew. % Sahne-Topping und ca. 40-60 Gew. % Süßmolkekonzentrat erhalten.

Ein geschmacklicher Unterschied zu einem Pudding, bei dem die ca. 42,25 Gew. % Molkekonzentrat ebenfalls aus Magermilch bestehen, der ansonsten aber aus den gleichen Bestandteilen besteht, ist nicht zu erkennen.

Statt dem zuvor dargestellten Ausführungsbeispiel kann durch Ersatz des Kakaos durch Vanille statt eines Schokoladepuddings ein entsprechender Vanillepudding zur Verfügung gestellt werden.

Durch eine Erhöhung des Sahne-Toppinggehalts von 1 Gew. % gemäß der zuvor angegebenen Rezeptur auf ca. 10 Gew. % kann ein Sahne-pudding erhalten werden, der wahlweise Je nach Zumischung von Kakao oder Vanille als Schokoladen-Sahnepudding oder Vanille-Sahnepudding im Rahmen der Lehre der vorliegenden Erfindung bereitgestellt werden kann.

Statt Magermilch kann im Rahmen der Erfindung selbstverständlich auch Vollmilch oder Sahne oder Milchpulver eingesetzt werden. In dem Fachmann bekannten Umfang können der Mischung auch Aromastoffe beigemengt sein.

## Patentansprüche

1. Pudding im wesentlichen bestehend aus Milch, insbesondere Magermilch, Zucker, Stärke, Bindemittel, Geliermittel und gegebenenfalls Kakao, Vanille und/oder Aromastoffen sowie Sahne-Topping,
**dadurch gekennzeichnet,**
daß ein Großteil des Milchanteils durch Molke, Molkekonzentrat bzw. Molkepulver ersetzt ist.

2. Pudding nach Anspruch 1, dadurch gekennzeichnet, daß die Molke, das Molkekonzentrat bzw. das Molkepulver entsalzt oder hydrolisiert ist.

3. Pudding nach Anspruch 1 oder Anspruch 2, dadurch gekennzeichnet, daß ca. 50 % des Milchanteils durch Molkekonzentrat ersetzt ist.

4. Pudding nach Anspruch 1 oder Anspruch 3, dadurch gekennzeichnet, daß der Gewichtsanteil des Molkekonzentrats ca. 35 Gew. % bis 50 Gew. %, vorzugsweise 40 Gew. % bis 45 Gew. % beträgt.

5. Pudding nach einem der Ansprüche 1 bis 4, dadurch gekennzeichnet, daß das Molkekonzentrat einen Trockenanteil von 7 % bis 12 %, vorzugsweise 10 % enthält.

## Claims

1. Pudding essentially comprising milk, in particular skimmed milk, sugar, starch, binder, gelatinizing agent with or without cocoa, vanilla and/or aroma substances and cream topping, characterized in that a large part of the milk portion is replaced by whey, whey concentrate and/or whey powder.

2. Pudding according to Claim 1, characterized in that the whey, the whey concentrate and/or the whey powder is desalted or hydrolysed.

3. Pudding according to Claim 1 or Claim 2, characterized in that approximately 50 % of the milk portion is replaced by when concentrate.

4. Pudding according to Claim 1 or Claim 3, characterized in that the proportion by weight of the whey concentrate is approximately 35 % by weight to 50 % by weight, preferably 40 % by weight to 45 % by weight.

5. Pudding according to one of Claims 1 to 4, characterized in that the whey concentrate has a solids content of 7 % to 12 %, preferably 10 %.

## Revendications

1. Pudding composé de lait, en particulier de lait maigre, de sucre, d'amidon, de liant, d'agent gélifiant et éventuellement de cacao, de vanille et/ou de substances aromatiques ainsi que de garniture de crème, caractérisé en ce qu'une grande partie de la proportion de lait est remplacée par du lactosérum, du concentré de lactosérum ou de la poudre de lactosérum.

2. Pudding selon la revendication 1, caractérisé en ce que le lactosérum, le concentré de lactosérum ou la poudre de lactosérum est dessalé ou hydrolysé.

3. Pudding selon la revendication 1 ou la revendication 2, caractérisé en ce qu'environ 50% de la proportion de lait sont remplacés par du concentré de lactosérum.

4. Pudding selon la revendication 1 ou la revendication 3, caractérisé en ce que la proportion de poids du concentré de lactosérum est d'environ 35% en poids à 50% en poids, de préférence de 40% en poids à 45% en poids.

5. Pudding selon l'une des revendications 1 à 4, caractérisé en ce que le concentré de lactosérum contient une proportion de matière sèche de 7% à 12%, de préférence 10%.
